# EUROPEAN PATENT APPLICATION

(11) **EP 3 364 536 A1**
(43) Date of publication of application: **22.08.2018**
(21) Application number: 17305180.6
(22) Date of filing: 17.02.2017
(51) Int. Cl.: H02M 1/15

(54) **TUNABLE FILTERING DEVICE FOR RAILWAY TRACTION DRIVE SYSTEMS**

(71) Applicant: ALSTOM Transport Technologies, 93400 Saint-Ouen (FR)
(72) Inventor: BARLINI, Davide, 20151 Milano (IT); KAVITHA, Thumu, 507167 KHAMMAM (IN)
(74) Representative: Lavoix

(57) **Abstract**

Tunable filtering device for an electrical power conversion system of a railway vehicle having a first input terminal and a second input terminal adapted to be connected to a rectifier circuit, the tunable filtering device comprising: - a first switch unit, - a resonator circuit, and - a second switch unit electrically connected in series between the first input terminal and the second input terminal, each switch unit comprising a switch being each electrically connected in parallel with a diode - the first switch unit is electrically connected to the first input terminal, - the second switch unit is electrically connected to the second input terminal.

## Description

The present invention relates to a tunable filtering device for an electrical power conversion system of a railway vehicle having a first input terminal and a second input terminal adapted to be connected to a rectifier circuit.

Some electric railway vehicles are designed to receive an alternating current/voltage by a power supply network, but are equipped with an electrical machine adapted to work with direct current. These railway vehicles need an on-board power conversion system, for example comprising a single-phase rectifier, in order to convert the alternating current/voltage to a direct current/voltage.

The direct current/voltage obtained with such a conversion contains an undesired electric power fluctuation, also called ripple, superimposed as a waveform on the direct current/voltage.

Such a ripple may destroy the direct-current capacitors of the railway vehicle and/or can disturb the controlling of the electrical machine.

In order to reduce the ripple, a ripple-filter comprising a resonator circuit is used.

The resonator circuit is configured to filter one specific frequency, which is the ripple frequency.

When the railway vehicle is exposed to power supply networks having different frequencies, as it is the case for example between different power supply networks of different countries, the ripple-filter needs a specific resonator circuit for each power supply network in order to filter the ripple frequency of every power supply network.

Therefore, known ripple-filters are bulky, expensive and can only be used in power supply networks with predefined frequencies.

Accordingly, it is an object of the present invention to overcome the drawbacks of the prior art and to provide a ripple-filter that is small, economic and easily useable with power supply networks having different frequencies.

This object is achieved with the above-mentioned tunable filtering device comprising:
- a first switch unit,
- a resonator circuit, and
- a second switch unit electrically connected in series between the first input terminal and the second input terminal,
   each switch unit comprising a switch being each electrically connected in parallel with a diode
- the first switch unit is electrically connected to the first input terminal,
- the second switch unit is electrically connected to the second input terminal.

The tunable filtering device according to the invention uses only one resonator circuit for filtering the ripple-frequency, even when the tunable filtering device is used with different power supply networks having different frequencies. This allows reducing the size of the tunable filtering device and a more diversified usage of the tunable filtering device for different power supply networks compared to a known resonating filter device.

The power efficiency of the tunable filtering device is also increased compared to known filters because the charging and discharging of the capacitor is precisely controlled by the tunable filtering device only once ripple becomes so high to produce disturbance. In other words, while known filters are always connected and thus continuously the current dissipates power through stray resistance of the inductance and capacitor, the tunable filtering device is activated only when ripple produces issues for the traction. Therefore, when it is not activated, it doesn't consume power.

Also, the tunable filtering device does not need any external power supply compared to known active filtering devices. This is possible because of controlled energy storage inside the tunable filtering device.

According to preferred embodiments, the tunable filtering device comprises one or more of the following features, taken in all technical possible combinations:
- the resonator circuit comprising an filtering inductor connected in series with a filtering capacitor;
- for each switch unit, the switch is a transistor, in particular, an insulated-gate bipolar transistor, wherein, in particular, an emitter of each transistor is electrically connected to the resonator circuit;
- for each switch unit, an anode of the diode is electrically connected to the resonator circuit, and a cathode of the diode is electrically connected to the respective terminal of the tunable filtering device;
- the filtering inductor has an inductance of 1.52 mH;
- the filtering capacitor has a capacitance of 1.67 mF;
- further comprising a control unit adapted to control the switches of the first and second switching units;
- the control unit comprises a measuring unit configured to measure a first DC-voltage at the first input terminal;
   The invention concerns also an electrical power conversion system of a railway vehicle comprising a tunable filtering device as described here-above and a railway vehicle comprising such an electrical power conversion system.
   The invention will now be described in detail with reference to the drawing, wherein:

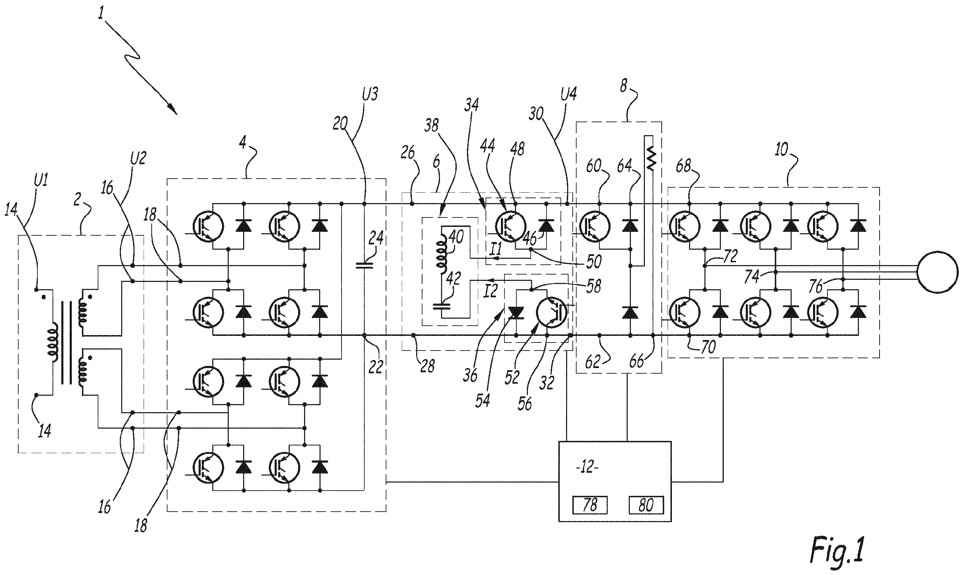

- Figure 1 shows an electrical power conversion system comprising a tunable filtering device according to the invention.

Figure 1 shows an electrical power conversion system 1, notably for a railway vehicle, comprising an electrical power transformer 2, a double rectifier 4 arranged downstream to the electrical power transformer 2, a filtering device 6 arranged downstream to the double rectifier 4, a rheostatic chopper 8 arranged downstream to the tunable filtering device 6, an inverter 10 arranged downstream to the rheostatic chopper 8 and a control unit 12 electrically connected to the double rectifier 4, to the tunable filtering device 6, to the rheostatic chopper 8 and to the inverter 10.

In this description, the term "downstream" refers to a current direction according to the direction defined by the conventional electric current. The term "upstream" refers to a current direction opposite to the downstream current direction.

In this description, the abbreviation AC is used to mean merely alternating and refers to alternating current or alternating voltage. The abbreviation DC is used to mean merely direct and refers to direct current or direct voltage.

The electrical power transformer 2 is electrically connected with two input terminals 14 to an electric power network (not shown) providing a first AC-voltage U1 to the electrical power transformer 2. The electrical power transformer 2 allows transforming the first AC-voltage U1 to a second AC-voltage U2. The second AC-voltage U2 is provided by the electrical power transformer 2 to at least two output terminals 16.

The double rectifier 4 is electrically connected with at least two input terminals 18 to the at least two output terminals 16 of the electrical power transformer 2.

The double rectifier 4 allows rectifying the second AC-voltage U2 into a first DC-voltage U3 provided to a first output terminal 20 of the double rectifier 4. The double rectifier 4 has also a second output terminal 22. The double rectifier 4 is electrically connected to the control unit 12 which controls the double rectifier 4. The double rectifier 4 can be interpreted as a DC-voltage source. The double rectifier 4 can be a four-quadrant rectifier.

A smoothing capacitor 24 can be connected with a first terminal to the first output terminal 20 and with a second terminal to the second output terminal 22. The smoothing capacitor 24 is adapted for reducing voltage fluctuations of the first DC-voltage U3. Such voltage fluctuations are also called ripple R.

The ripple R has a main frequency which is identical to twice the frequency of the first AC-voltage U1. Additionally, it is possible that the ripple R has other supplemental frequencies superposed on the main frequency.

The tunable filtering device 6 has a first input terminal 26 electrically connected to the first output terminal 20 of the double rectifier 4 and a second input terminal 28 electrically connected to the second output terminal 22 of the double rectifier 4.

The tunable filtering device 6 has a first output terminal 30 and a second output terminal 32.

The tunable filtering device 6 is electrically connected to the control unit 12 which controls the tunable filtering device 6.

The tunable filtering device 6 comprises a first switch unit 34, a resonator circuit 38 and a second switch unit 36, all connected in series.

The first switch unit 34 and the second switch unit 36 are controlled by the control unit 12. The resonator circuit 38 comprises a filtering inductor 40 and a filtering capacitor 42.

The first switch unit 34 comprises a first switch 44 and a first diode 46 electrically connected in parallel.

The first switch 44 can be closed and opened by the control unit 12. The first switch 44 has a first switch terminal 48 which is electrically connected to the first input terminal 26 and the first output terminal 30 of the tunable filtering device 6. The first switch 44 has a second switch terminal 50 which is electrically connected to a first terminal of the resonator circuit 38.

The first diode 46 is electrically connected in parallel to the first switch 44 between the first switch terminal 48 and the second switch terminal 50. The anode of the first diode 46 is connected to the second switch terminal 50, and the cathode of the first diode 46 is connected to the first switch terminal 48 of the first switch 44.

The first switch 44 is configured for controlling a charging of the filtering capacitor 42.

The second switch unit 36 comprises a second switch 52 and a second diode 54 electrically connected in parallel.

The second switch 52 can be closed and opened by the control unit 12. The second switch 52 has a first switch terminal 56 which is electrically connected to the second input terminal 28 and the second output terminal 32 of the tunable filtering device 6. The second switch 52 has a second switch terminal 58 which is electrically connected to a second terminal of the resonator circuit 38.

The second diode 54 is electrically connected in parallel to the second switch 52 between the first switch terminal 56 and the second switch terminal 58 of the second switch 52. The anode of the second diode 54 is connected to the second switch terminal 58, and the cathode of the second diode 54 is connected to the first switch terminal 56 of the second switch 52.

The second switch 52 is configured for controlling a discharging phase of the filtering capacitor 42.

The first switch 44 and the second switch 52 can be transistors, in particular insulated-gate bipolar transistors.

The filtering inductor 40 and the filtering capacitor 42 of the resonator circuit 38 are connected in series to form the resonator circuit 38. Such a resonator circuit 38 is also known as LC circuit or resonance circuit. The serial order of the filtering inductor 40 and the filtering capacitor 42 inside the resonator circuit 38 can be freely chosen.

The filtering inductor 40 has for example an electrical inductance of 1.52 mH.

The filtering capacitor 42 has for example an electrical capacitance of 1.67mF. Filter inductor 40 and filter capacitor 42 are chosen to have resonant frequency, in particular at 100Hz, depending on the frequency of the supply line or the first AC-voltage U1, which is for example 50Hz.

The tunable filtering device 6 allows filtering of the first DC-voltage U3 into a second DC-voltage U4.

The rheostatic chopper 8 has a first input 60 electrically connected to the first output 30 of the tunable filtering device 6, and a second input 62 electrically connected to the second output 32 of the tunable filtering device 6. The rheostatic chopper 8 has a first output 64 and a second output 66. The rheostatic chopper 8 is controlled by the control unit 12. The elements constituting the chopper are generally known and are not further explained here.

The rheostatic chopper 8 allows to dissipate excessive power through resistance due to electrical braking once line is not regenerative, or overvoltage which arrives from the power network supply.

The inverter 10 has a first input terminal 68 electrically connected to the first output 64 of the rheostatic chopper 8, and a second input 70 electrically connected to the second output 66 of the tunable filtering device 6. The inverter 10 has a first output 72, a second output 74 and a third output 76. The inverter 10 is controlled by the control unit 12. The elements constituting the inverter are generally known and are not further explained here.

The inverter is configured for modifying the second DC-voltage U4 into a three phase current, which can be provided as power source to an electric machine (not shown) of a railway vehicle.

The control unit 12 is configured for measuring a voltage, in particular for measuring the first DC-voltage U3.

The control unit 12 has a timer for measuring time.

The control unit has a memory 78.

The control unit 12 has a measuring unit 80 configured to measure the first DC-voltage U3 at the first output terminal 20 of the double rectifier 4.

The control unit 12 is configured to control the first and second switches 44, 52 in order to control the charging and discharging of the filtering capacitor 42.

The functioning of the electrical power conversion system 1, and in particular the functioning of the tunable filtering device 6 is described now.

The first AC-voltage U1 is provided by the electric power network (not shown) to the electrical power transformer 2.

The electrical power transformer 2 transforms the first AC-voltage U1 to the second AC-voltage U2.

The control unit 12 controls the double rectifier 4 which converts the second AC-voltage U2 into the first DC-voltage U3.

The smoothing capacitor 24 reduces voltage fluctuations of the first DC-voltage U3, which voltage fluctuations are dependent on the frequency of the first AC-voltage U1, in particular the 100 Hz ripple. The voltage fluctuations can be reduced up to 8% of the first DC-voltage U3. For example, the capacitor may have a value of 6.33 mF in case the frequency of the first AC voltage is 50 Hz. In case of a frequency of 16.6 Hz of the first AC voltage, the capacitor has a value of 20 mF.

The tunable filtering device 6 allows filtering of the first DC-voltage U3 into a second DC-voltage U4 comprising less voltage fluctuations, or a lower ripple R, than the first DC-voltage U3. The filtering is done by intelligent controlling of the duty cycles of the first and second switch 44, 52 of the tunable filtering device 6. This allows charging and discharging of the capacitor 42 of the resonator circuit 38 at predefined moments.

The control unit allows precise tuning of a filtering frequency by predefined control of the first switch 44 and the second switch 52.

Therefore, it becomes obsolete to use different resonators circuits for different power supply frequencies as it is done in known tunable filtering devices.

In an alternative embodiment (not shown), the measuring unit is arranged separately from the control unit 12 and is electrically connected to the control unit 12.

## Claims

1. Tunable filtering device (6) for an electrical power conversion system (1) of a railway vehicle having a first input terminal (26) and a second input terminal (28) adapted to be connected to a rectifier circuit (4), the tunable filtering device comprising:
- a first switch unit (34),
- a resonator circuit (38), and
- a second switch unit (36) electrically connected in series between the first input terminal (26) and the second input terminal (28),
each switch unit (34, 36) comprising a switch (44, 52) being each electrically connected in parallel with a diode (46, 54),
- the first switch unit (34) being electrically connected to the first input terminal (26),
- the second switch unit (36) being electrically connected to the second input terminal (28).

2. Tunable filtering device according to claim 1, wherein the resonator circuit (38) comprising a filtering inductor (40) connected in series with a filtering capacitor (42).

3. Tunable filtering device according to claim 1 or 2, wherein for each switch unit (34, 36), the switch (44, 52) is a transistor, in particular, an insulated-gate bipolar transistor, and wherein, in particular, an emitter of each transistor is electrically connected to the resonator circuit (38).

4. Tunable filtering device according to any of claims 1 to 3, wherein for each switch unit (34, 36), an anode of the diode (46, 54) is electrically connected to the resonator circuit (38), and a cathode of the diode (46, 54) is electrically connected to the respective terminal (26, 28) of the tunable filtering device (6).

5. Tunable filtering device according to claim 2, wherein the filtering inductor (40) has an inductance of 1.52 mH.

6. Tunable filtering device according to according to claim 2, wherein the filtering capacitor (42) has a capacitance of 1.67 mF.

7. Tunable filtering device according to any of claims 1 to 6, further comprising a control unit (12) adapted to control the switches (44, 52) of the first and second switching units (34, 36).

8. Tunable filtering device according to claim 7, wherein the control unit (12) comprises a measuring unit (80) configured to measure a first DC-voltage (U3) at the first input terminal (26).

9. Electrical power conversion system of a railway vehicle comprising a tunable filtering device, wherein the tunable filtering device is according to any one of claims 1 to 8.

10. Railway vehicle comprising an electrical power conversion system according to claim 9.

## Amended claims

### Amended claims in accordance with Rule 137(2) EPC.

1. Tunable filtering device (6) for an electrical power conversion system (1) of a railway vehicle having a first input terminal (26) and a second input terminal (28) adapted to be connected to a rectifier circuit (4), the tunable filtering device comprising:
- a first switch unit (34),
- a resonator circuit (38), and
- a second switch unit (36) electrically connected in series between the first input terminal (26) and the second input terminal (28),
each switch unit (34, 36) comprising a switch (44, 52) being each electrically connected in parallel with a diode (46, 54),
- the first switch unit (34) being electrically connected to the first input terminal (26),
- the second switch unit (36) being electrically connected to the second input terminal (28), **characterized in that** the tunable filtering device further comprises:
- a control unit (12) adapted to control the switches (44, 52) of the first and second switching units (34, 36),
wherein the control unit (12) is adapted for performing filtering by intelligent controlling of the duty cycles of the switches (44, 52) of the tunable filtering device (6), for allowing charging and discharging of a capacitor (42) of the resonator circuit (38) at predefined moments.

2. Tunable filtering device according to claim 1, wherein the resonator circuit (38) comprising a filtering inductor (40) connected in series with a filtering capacitor (42).

3. Tunable filtering device according to claim 1 or 2, wherein for each switch unit (34, 36), the switch (44, 52) is a transistor, in particular, an insulated-gate bipolar transistor, and wherein, in particular, an emitter of each transistor is electrically connected to the resonator circuit (38).

4. Tunable filtering device according to any of claims 1 to 3, wherein for each switch unit (34, 36), an anode of the diode (46, 54) is electrically connected to the resonator circuit (38), and a cathode of the diode (46, 54) is electrically connected to the respective terminal (26, 28) of the tunable filtering device (6).

5. Tunable filtering device according to claim 2, wherein the filtering inductor (40) has an inductance of 1.52 mH.

6. Tunable filtering device according to according to claim 2, wherein the filtering capacitor (42) has a capacitance of 1.67 mF.

7. Tunable filtering device according to claim 1, wherein the control unit (12) comprises a measuring unit (80) configured to measure a first DC-voltage (U3) at the first input terminal (26).

8. Electrical power conversion system of a railway vehicle comprising a tunable filtering device, wherein the tunable filtering device is according to any one of claims 1 to 7.

9. Railway vehicle comprising an electrical power conversion system according to claim 8.
